(19) Europäisches Patentamt
European Patent Office
Office européen des brevets

(11) **EP 3 285 352 A1**

(12) **EUROPEAN PATENT APPLICATION**

(43) Date of publication:
**21.02.2018 Bulletin 2018/08**

(51) Int Cl.:
*H02J 7/00* *(2006.01)*   *B60L 11/18* *(2006.01)*

(21) Application number: **16184824.7**

(22) Date of filing: **18.08.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Honeywell spol s.r.o.**
**14800 Prague 4 (CZ)**

(72) Inventor: **TRNKA, Pavel**
**Morris Plains, NJ New Jersey 07950 (US)**

(74) Representative: **Houghton, Mark Phillip**
**Patent Outsourcing Limited**
**1 King Street**
**Bakewell, Derbyshire DE45 1DZ (GB)**

(54) **BATTERY PACK CELL ACTIVE BALANCING**

(57)    A device and method include determining battery external power demand on a multiple cell battery, transferring current between cells utilizing an energy accumulation device, and controlling transfer of current between the cells based on balancing current and battery external power demand while minimizing power loss.

FIG. 1

**Description**

Background

A battery pack is typically a serial combination of battery cells or a serial combination of blocks of parallel cells. Each cell in the battery pack is different due to manufacturing variability and thus has a corresponding different charge capacity. The variability in charge capacity limits overall usable capacity of the battery pack to the capacity of the worst cell (the weakest link in a chain). This problem can be mitigated by a balancing circuit that is connected to each cell in the battery pack. The balancing circuit can transport charge between cells. That enables using full capacity of all cells; however, each charge transfer is associated with some energy loss.

Summary

A method includes determining battery external power demand on a multiple cell battery, transferring current between cells utilizing an energy accumulation device, and controlling transfer of current between the cells based on balancing current and battery external power demand while minimizing power loss.
A non-transitory computer readable storage device has instructions which when executed by circuitry cause the circuitry to perform operations. The operations include determining battery external power demand on a multiple cell battery, transferring current between cells utilizing an energy accumulation device, and controlling transfer of current between the cells based on balancing current and battery external power demand while minimizing power loss.
An energy storage system includes multiple energy cells coupled to provide a current to a load having a varying energy demand, an energy accumulation device coupled to two or more of the energy cells, and a balancing controller coupled to the energy accumulation device to control transfer of energy between the two or more energy cells and the energy accumulation device based on balancing transfer of energy and varying energy demand while minimizing power loss.

Brief Description of the Drawings

FIG. 1 is a block circuit diagram of active balancing of a multiple cell battery according to an example embodiment.
FIG. 2 is a block circuit diagram of an active balancing circuit according to an example embodiment.
FIGs. 3A, 3B, 3C, and 3D illustrate periodic electrical signals associated with charge pumping control of a balancing circuit according to an example embodiment.
FIG. 4 is a graph illustrating heat loss due to balancing at various currents and battery external power according to an example embodiment.
FIG. 5 is a graph illustrating charge transfer efficiency due to balancing at various currents and battery external power according to an example embodiment.
FIG. 6 is an equation for keeping mean balancing current on target while minimizing balancing power loss according to an example embodiment.
FIG. 7A is graph illustrating a battery external power demand according to an example embodiment.
FIG. 7B is a graph illustrating optimal balancing vs. standard balancing by a constant current according to an example embodiment.
FIG. 8 is a block diagram of a system for controlling balancing current according to an example embodiment.
FIG. 9 is a graph of a balancing current map shown in further detail according to an example embodiment.
FIG. 10 is an equation for determining a shape of a balancing current map while minimizing power loss for a given probability of external battery power according to an example embodiment.
FIG. 11 is a block schematic diagram of circuitry to implement methods, models, and controllers according to example embodiments.

Detailed Description

In the following description, reference is made to the accompanying drawings that form a part hereof, and in which is shown by way of illustration specific embodiments which may be practiced. These embodiments are described in sufficient detail to enable those skilled in the art to practice the invention, and it is to be understood that other embodiments may be utilized and that structural, logical and electrical changes may be made without departing from the scope of the present invention. The following description of example embodiments is, therefore, not to be taken in a limited sense, and the scope of the present invention is defined by the appended claims.

The functions or algorithms described herein may be implemented in software in one embodiment. The software may consist of computer executable instructions stored on computer readable media or computer readable storage device such as one or more non-transitory memories or other type of hardware based storage devices, either local or networked. Further, such functions correspond to modules, which may be software, hardware, firmware or any combination thereof. Multiple functions may be performed in one or more modules as desired, and the embodiments described are merely examples. The software may be executed on a digital signal processor, ASIC, microprocessor, or other type of processor operating on a computer system, such as a personal computer, server or other computer system, turning such computer system into a specifically programmed machine.

Batteries are typically constructed as a string of serially connected battery cells or a string of serially connected blocks of parallel cells. A battery cell is an elementary electrochemical power source with nominal voltage determined by the type of battery chemistry. The number of cells ranges from several cells (e.g. in a notebook battery) to hundreds of cells (e.g. in an electric vehicle battery). The serial connection of cells may be used to achieve higher battery voltage. The parallel connection of cells may be used to achieve higher charge capacity.

Unfortunately, each cell has different properties due to manufacturing variability - mainly different charge capacity. The serially connected cells are charged and discharged by the same current, which has to be stopped whenever any cell is fully charged or fully discharged to prevent battery damage, while other cells can still have some remaining charge (discharging) or capacity to store additional charge (charging). This limits overall usable battery capacity range to the capacity range of the worst cell (the weakest link in a chain).

The problem of cell variability can be mitigated by connecting every cell (or cell block) in the battery to an active balancing circuit, which can transport charge between cells. Such circuit for example transports charge from low capacity cells to high capacity cells during the charging process such that at the end of the charging all cells are fully charged. The circuit allows full capacity utilization of each cell; however, each charge transport is associated with inevitable energy loss in the balancing circuit.

The associated energy loss reduces stored battery energy and dissipates to heat causing unwanted battery temperature increase. The problem is how to control balancing circuit such that the associated balancing losses are minimized. Current control strategies ignoring external battery power (e.g. using constant balancing current) are not optimal.

In various embodiments an active balancing circuit is controlled to minimize energy losses occurring during charge balancing. The optimal control is based on a fact that balancing losses do not depend solely on the balancing current, but also on the battery external power (i.e. the power that flows in or out of battery).

Balancing current may be modulated with respect to the battery external power using a model of balancing losses. Good results can be achieved if a preview of battery external power is known. For example, in the case of an electric vehicle, a road grade preview from a GPS position and road grade maps may provide the preview of battery external power demands. Semi-optimal control may also be obtained in cases where no preview information on a battery external power is available.

A simulation has demonstrated that some embodiments of optimal active balancing may achieve up to 10 % losses reduction in a comparison to prior constant current balancing methods.

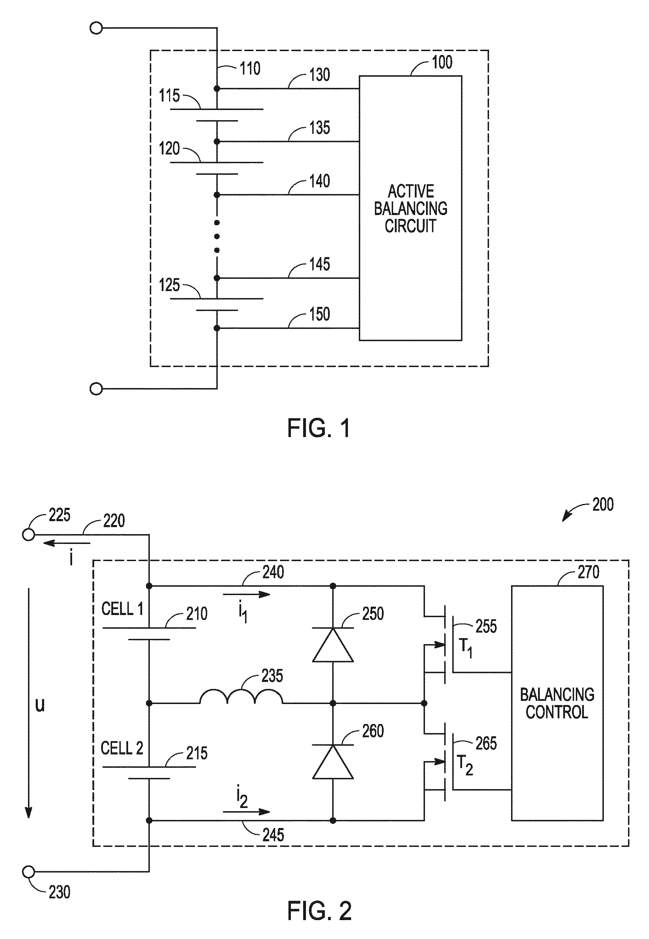

FIG. 1 is a block circuit diagram of an active balancing circuit 100 coupled to a battery pack 110. The battery pack 110 has multiple cells indicated at 115, 120, and 125 that each have positive and negative terminals connected via conductors 130, 135, 140, 145, and 150 to the active balancing circuit 100 to distribute current to and from the respective cells.

FIG. 2 is a block circuit diagram of one example active balancing circuit indicated generally at 200. Circuit 200 is simplified to show just two cells 210 and 215 connected in series that together provide a total current, i, at 220 to a load that is not shown, but coupled across a positive contact 225 and a negative contact 230. In one embodiment, the balancing circuit 200 is based on a buck converter which includes an energy accumulation device 325 in the form an inductor. In one example, charge is pumped from cell 1 at 210 to cell 2 at 215. Cell 1, 210, provides a current $i_1$ on a conductor 240, resulting in a current $i_2$ being provided to cell 2, 215, along a conductor 245. Cell 1, 210, has a parallel coupled diode 250 and switch T1 255. Cell 2, 215, has a parallel coupled diodes 260 and switch T2 265. A balancing control 270 provides signals to the switches, which in one embodiment comprise transistors that are turned on and off by control 270 to control the current transferred between cells.

Optimal active balancing may be used with many different types of balancing mechanisms. Circuit 200 is a simplified example showing only two cells and one type of balancing circuit using a 1:1 balancing mechanism. 1:1 balancing may be extended to more than two cells by simply pumping charge between adjacent or neighboring cells. Such pumping may increase losses if charge needs to be pumped over larger distances. In a 1:N balancing mechanism, a transformer may be used to pump charge from a selected single cell to all cells or from all cells to a single cell.

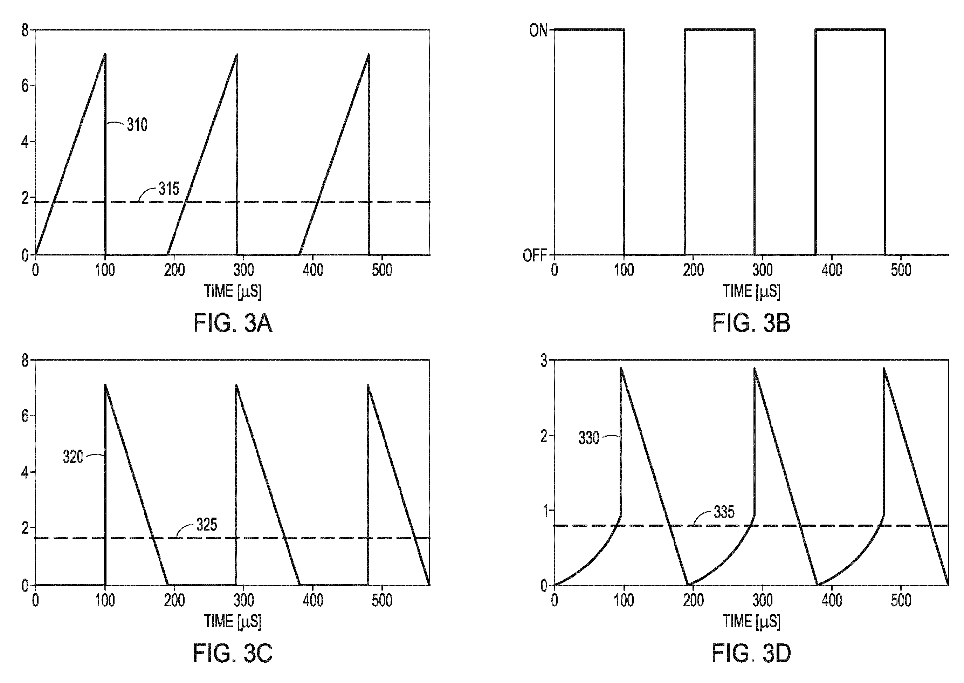

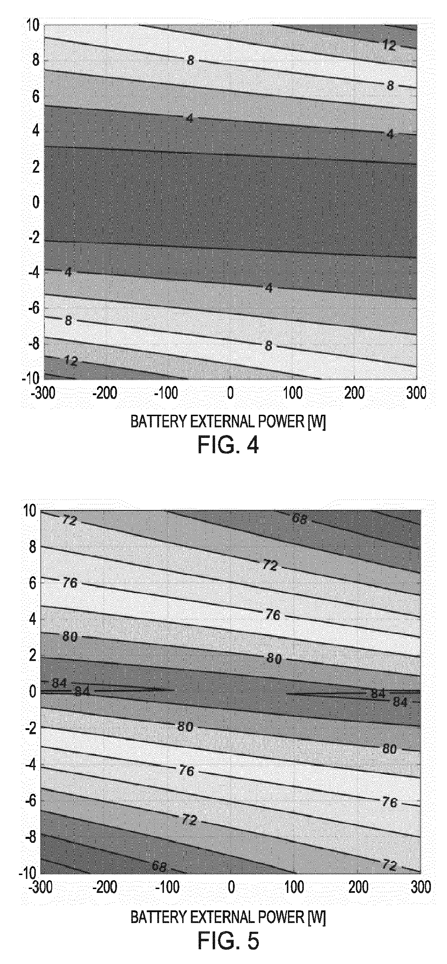

FIGs. 3A, 3B, 3C, and 3D illustrate periodic electrical signals associated with the charge pumping control of circuit 200. FIG. 3 A illustrates the balancing current $i_1$ from cell 1 210 in amps, over time in μsec. The current in real time is represented by solid line 310 with a mean value of the current represented by broken line 315. FIG. 3B is a graph illustrating a switch state of switch T1 255. When the switch is on, the current $i_1$ rises steadily, and then drops quickly when the switch is off, as the current $i_2$ is transferred from the energy accumulation device 225 to cell 2, 215 as illustrated in FIG. 3C. The transferred current is indicated as solid line 320 and the mean current as broken line 325. Switch T2 265 is held off during the transfer. FIG. 4C illustrates the power loss associated with the charge transfer, with the solid line 330 representing real time power loss and the broken line 335 representing the mean power loss in Watts. Most power is lost through heat generation via current flow through parasitic resistance of the various components.

Electrical signals in the circuit 200 are periodical and can be described by their mean values over a period. x is a mean value of a periodic signal $x(t)$ with a period $\tau$ :

$$\overline{x} = \frac{1}{\tau} \int_{t=t_0}^{t_0+\tau} x(t)dt.$$

The balancing current $i_B$ is then a mean current from the source cell

$$i_B = \overline{i_1}.$$

The charge pumping efficiency $\varepsilon_B$ is a ratio between destination and source mean currents

$$\varepsilon_B = \frac{\overline{i_2}}{\overline{i_1}}.$$

The balancing power loss is a mean value of a sum of all heat losses caused by the active balancing circuit operation (e.g. a heat loss on a parasitic inductor resistance, an on-state transistor resistance, a cell internal resistance, a diode voltage drop, etc.)

$$P_B = \overline{P}_{HEAT}.$$

Optimal balancing is based on an observation that power loss $P_B$ associated with a charge transfer does not depend only on the balancing current $i_B$ but also on the battery pack external power $P_E$ such that $P_B$ ($i_B$, $P_E$).

The external power in some applications may be highly time-variable, e.g. a hybrid electric vehicle or a purely electric vehicle). Modulating the balancing current $i_B$ according to the external power $P_E$ gives in this case considerably lower energy loss than standard balancing using constant balancing current.

An illustrative example of Buck converter power losses and charge transfer efficiency as a function of balancing current and battery pack external power is in **Error! Reference source not found**. and 5 respectively. In FIG. 4, the heat loss due to balancing is shown on each line in Watts. The y-axis is the mean balancing current in Amps, and the battery external power in Watts is shown on the x-axis. Note that the battery external power corresponds to both charging the battery (negative numbers) and drawing energy from the battery (positive numbers). Also, the heat loss is generally greater with increasing absolute value of balancing current. In FIG. 5, the x-axis and y-axis are the same as in FIG. 4, however the lines include a charge transfer efficiency as a percentage. The efficiency generally drops with increase absolute value of balancing current.

In one embodiment, future load requirements on the battery may be approximately known, and may be referred to as a preview of battery pack external power on a future time horizon. In one example, an electric vehicle, such as a hybrid or totally electric vehicle may have a known GPS position and direction of travel from which road grade preview information may be calculated or otherwise known. A optimal active balancing can then be implemented using a model predictive control, computing optimal future balancing current trajectory $i_B(k+1),...,i_B(k+N)$ to minimize the balancing power loss on the future horizon while keeping a given target on a mean balancing current $i_B^{SP}$ :

$$\min_{i_B(k+1),\ldots,i_B(k+N)} \sum_{m=k+1}^{k+N} P_B\left(i_B(m), P_E(m)\right) \quad s.t. \quad \frac{1}{N}\sum_{m=k+1}^{k+N} i_B(m) = i_B^{SP},$$

where $P_E(k+1),\ldots, P_E(k+N)$ is a preview of the external power on a discrete time horizon $t(k+1), \ldots, t(k+N)$.

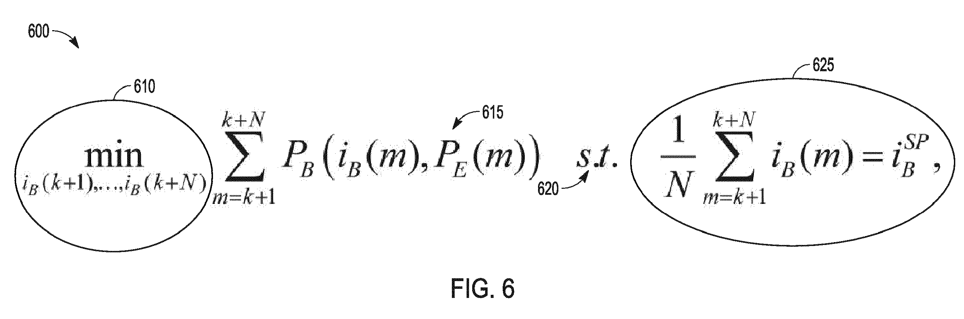

The above equation is shown in FIG. 6 at 600. The equation formulates a mathematical optimization problem with an objective to find N values of the future balancing current trajectory (piecewise-constant signal) such that the average value of those N values is equal to the target balancing current and the balancing power loss is minimal. The formulation assumes that the preview information on the external battery power load is known.

At 610, a penalty function 615 is minimized by finding N values of the future balancing current trajectory that will minimize the penalty function 615. The penalty function 615 is a sum of the balancing power losses in the N future points. The losses are a function of the balancing current and the known preview of the external battery power load. The minimization is subject to (s.t. 620) a constraint 625. The constraint 625 in this case is a request to have the mean value of the N balancing current values equal to the target balancing current.

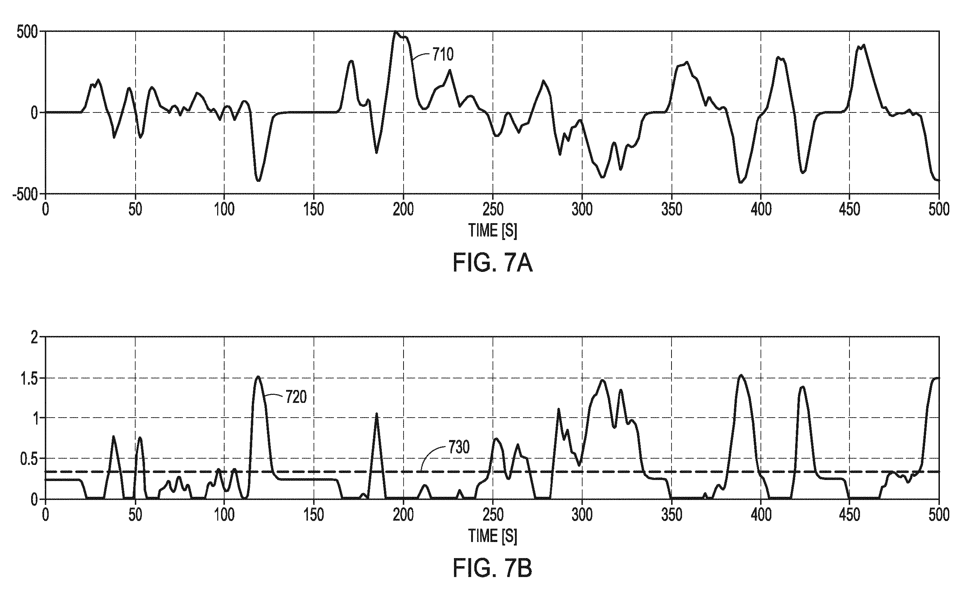

FIG. 7A is a graph illustrating a battery external power demand example in the form of an urban dynamometer driving schedule UDDS drive cycle fragment 710. This particular example is representative of a city driving, including starting and stopping, and has been used as a reference point for fossil fueled vehicles and for estimates of how many miles an electric vehicle may travel on a single charge. The demand is positive for acceleration and negative for regenerative breaking. The power in watts is shown on the y-axis with time in second shown on the x-axis. Line 710 is representative of the power demand.

An example of optimal balancing vs. standard balancing by a constant current is shown in graph form in FIG. 7B, which corresponds to the UDDS drive cycle fragment 710. It shows balancing of 300 Amp charge difference between two cells in 500 seconds using power profile corresponding with UDDS drive cycle fragment 710. Optimal balancing energy loss as shown by solid line 720 with power information achieves more than 9 % less energy loss of 94 J as compared to 103.4 J for constant current represented by broken line 730.

In further embodiments, a drive cycle fragment may be used based on correlation of measurements from previous trips taken to a known trip route obtained from a guidance system, such as a device providing directions to and from entered destinations based on GPS data. In still further embodiments, altitude changes and known road conditions, such as stoplights and speed limits may be used to generate a preview in the form of a drive cycle fragment for an identified trip.

A semi-optimal control can be designed in a case where no preview information on a battery external power is available. It can be based on a probability density function of the battery external *power* $p(P_E)$.

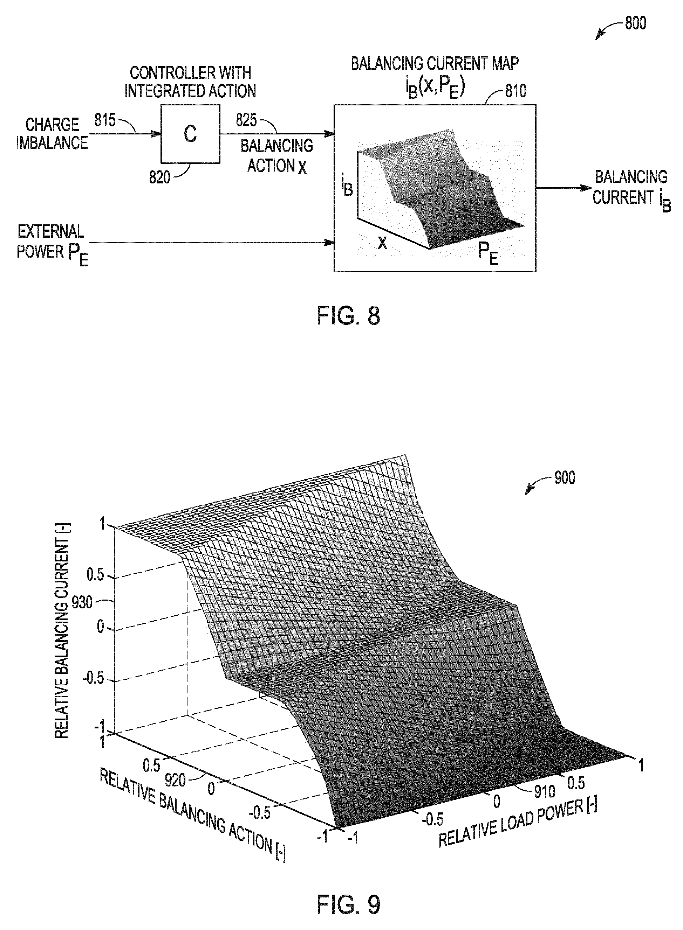

Such probability density function can be for example estimated for (hybrid) electric vehicle from historic telemetry data. Otherwise, a normal distribution can also be used. The balancing current is then controlled according to a system 800 shown in block diagram form in FIG. 8.

A balancing current map 810 maps external battery power $P_E$ and a balancing action *x* to the balancing current $i_B$. A charge imbalance 815 indication is received by a controller 820 with integral action to provide a balancing action x at 825 to the balancing current map 810. The charge imbalance indication 815 may include imbalance information and a balancing current request that maybe provided by a battery monitoring and management system. An external power $P_E$ 830 is provided to the balancing current map 810. The balancing action 825 is a relative variable $-1 \leq x \leq 1$ controlling balancing intensity. The map then provides a balancing current $i_B$ as function of the external power and balancing action. The map $i_B(x, P_E)$ can pre-computed by solving

$$\min_{i_B(P_E)} \int_{P_E^{\min}}^{P_E^{\max}} p(P_E) P_B\left(i_B(P_E), P_E\right) dP_E \quad s.t. \quad \frac{1}{i_B^{\max}} \int_{P_E^{\min}}^{P_E^{\max}} p(P_E) i_B\left(P_E\right) dP_E = x,$$

for a set of fixed x values.

An example of the balancing map is shown in FIG. 9 at 900 where an x-axis 910 corresponds to a relative balancing action, a y-axis 920 corresponds to a relative load power, and a z-axis 930 corresponds to a relative balancing current. Balancing current map 900 gives a relative value of a balancing current $i_B$ as a function of relative battery external power and balancing action signal x.

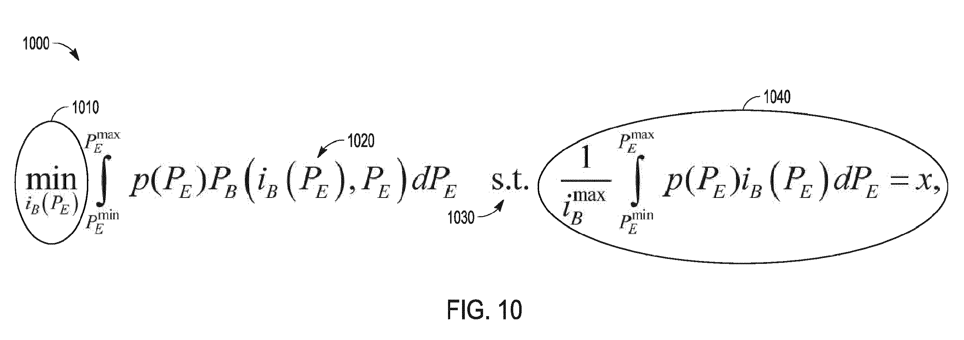

The above equation for pre-computing the map 900 is also illustrated in FIG. 10 at 1000, wherein a minimization function 1010 is used to find a shape of the map 900 relating the balancing current to the external battery power that will minimize a penalty function 1020. The penalty function 1020 is a mean value of the balancing power loss for a given probability of the external battery power. The minimization is subject to 1030 a constraint 1040. The constraint 1040 is a request to have the mean value of the balancing current equal to the target balancing current for given probability of the external battery power.

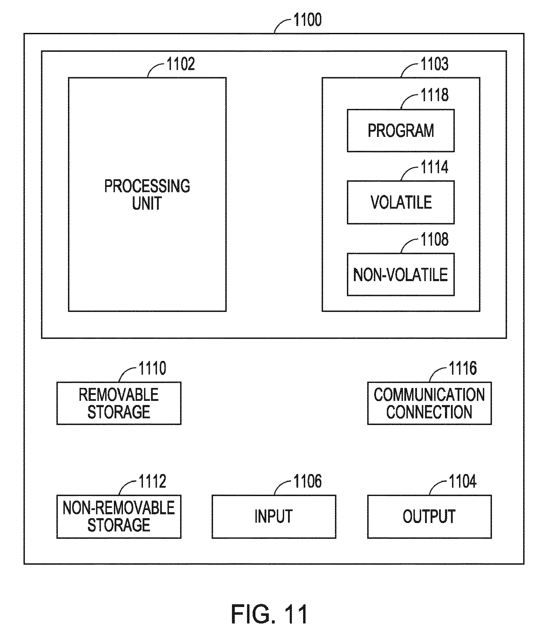

FIG. 11 is a block schematic diagram of circuitry 1100 to implement methods, models, and controllers according to example embodiments. All components need not be used in various embodiments. One example computing device in the form of a computer 1100, may include a processing unit 1102, memory 1103, removable storage 1110, and non-removable storage 1112. Although the example computing device is illustrated and described as computer 1100, the computing device may be in different forms in different embodiments. For example, the computing device may instead be a smartphone, a tablet, smartwatch, or other computing device including the same or similar elements as illustrated and described with regard to FIG. 11. Devices such as smartphones, tablets, and smartwatches are generally collectively referred to as mobile devices. Further, although the various data storage elements are illustrated as part of the computer 1100, the storage may also or alternatively include cloud-based storage accessible via a network, such as the Internet.

Memory 1103 may include volatile memory 1114 and non-volatile memory 1108. Computer 1100 may include - or have access to a computing environment that includes - a variety of computer-readable media, such as volatile memory 1114 and non-volatile memory 1108, removable storage 1110 and non-removable storage 1112. Computer storage includes random access memory (RAM), read only memory (ROM), erasable programmable read-only memory (EPROM) & electrically erasable programmable read-only memory (EEPROM), flash memory or other memory technologies, compact disc read-only memory (CD ROM), Digital Versatile Disks (DVD) or other optical disk storage, magnetic cassettes, magnetic tape, magnetic disk storage or other magnetic storage devices capable of storing computer-readable instructions for execution to perform functions described herein.

Computer 1100 may include or have access to a computing environment that includes input 1106, output 1104, and a communication connection 1116. Output 1104 may include a display device, such as a touchscreen, that also may serve as an input device. The input 1106 may include one or more of a touchscreen, touchpad, mouse, keyboard, camera, one or more device-specific buttons, one or more sensors integrated within or coupled via wired or wireless data connections to the computer 1100, and other input devices. The computer may operate in a networked environment using a communication connection to connect to one or more remote computers, such as database servers, including cloud based servers and storage. The remote computer may include a personal computer (PC), server, router, network PC, a peer device or other common network node, or the like. The communication connection may include a Local Area Network (LAN), a Wide Area Network (WAN), cellular, WiFi, Bluetooth, or other networks.

Computer-readable instructions stored on a computer-readable storage device are executable by the processing unit 1102 of the computer 1100. A hard drive, CD-ROM, and RAM are some examples of articles including a non-transitory computer-readable medium such as a storage device. The terms computer-readable medium and storage device do not include carrier waves.

Examples

  1. A method comprising:

    determining battery external power demand on a multiple cell battery;
    transferring current between cells utilizing an energy accumulation device;
    and
    controlling transfer of current between the cells based on balancing current and battery external power demand while minimizing power loss.

  2. The method of example 1 wherein determining battery external power demand comprises obtaining a preview of battery external power $P_E$ on a discrete time horizon.
  3. The method of example 2 wherein controlling transfer of current between the cells uses a model predictive control, minimizing balancing power loss on a future time horizon while keeping a given target on a mean balancing current.
  4. The method of example 3 wherein an optimal future current transfer trajectory $i_B(k+1),...,i_B(k+N)$ is calculated in accordance with:

$$\min_{i_B(k+1),\ldots,i_B(k+N)} \sum_{m=k+1}^{k+N} P_B\left(i_B(m), P_E(m)\right) \quad s.t. \quad \frac{1}{N}\sum_{m=k+1}^{k+N} i_B(m) = i_B^{SP},$$

where $P_E(k+1),\ldots, P_E(k+N)$ is a preview of the external power on a discrete time horizon $t(k+1),\ldots,t(k+N)$, $i_B$ is a balancing current, k is a point in time, N is a number of future values, and $i_B^{SP}$ is a target on a mean balancing current.

5. The method of example 4 wherein the first summation comprises a penalty function that is minimized by finding N values of the future balancing current trajectory that will minimize a sum of the balancing power losses in the N future values.

6. The method of example 1 wherein determining battery external power demand is based on a probability density function of the battery external power $p(P_E)$.

7. The method of example 6 wherein controlling transfer of current between the cells uses a balancing current map that maps external battery power $P_E$ and a balancing action x to the balancing current $i_B$.

8. The method of example 7 wherein the balancing current map $i_B(x, P_E)$ is pre-computed by solving

$$\min_{i_B(P_E)} \int_{P_E^{\min}}^{P_E^{\max}} p(P_E) P_B\left(i_B(P_E), P_E\right) dP_E \quad s.t. \quad \frac{1}{i_B^{\max}} \int_{P_E^{\min}}^{P_E^{\max}} p(P_E) i_B(P_E) dP_E = x,$$

for a grid of x values.

9. An energy storage system comprising:

    multiple energy cells coupled to provide a current to a load having a varying energy demand;
    an energy accumulation device coupled to two or more of the energy cells; and
    a balancing controller coupled to the energy accumulation device to control transfer of energy between the two or more energy cells and the energy accumulation device based on balancing transfer of energy and varying energy demand while minimizing power loss.

10. The energy storage system of example 9 and further comprising a plurality of switches, each switch coupled to the energy accumulation device and across a corresponding energy cell, wherein the switch is turned on and off by the balancing controller to control current provided to and from each cell via the energy accumulation device.

11. The energy storage device of any of examples 9-10 wherein the energy accumulation device comprises an inductor coupled to a positive terminal of one of the two energy cells and coupled to a negative terminal of the other of the two energy cells.

12. The energy storage device of example 11 and further comprising multiple diodes, each diode coupled to control a direction current flow between the cells.

13. The energy storage device of example 12 wherein each diode is coupled in parallel with one of the plurality of switches across the inductor and a respective energy cell.

14. The energy storage device of any of examples 9-13 wherein the varying energy demand is based on a preview of battery external power $P_E$ on a discrete time horizon, and wherein balancing transfer of energy and varying energy demand while minimizing power loss includes controlling transfer of current between the cells using a model predictive control, minimizing balancing power loss on a future time horizon while keeping a given target on a mean balancing current, and wherein an optimal future current transfer trajectory $i_B(k+1),\ldots,i_B(k+N)$ is calculated in accordance with:

$$\min_{i_B(k+1),\ldots,i_B(k+N)} \sum_{m=k+1}^{k+N} P_B\left(i_B(m), P_E(m)\right) \quad s.t. \quad \frac{1}{N}\sum_{m=k+1}^{k+N} i_B(m) = i_B^{SP},$$

where $P_E(k+1),\ldots, P_E(k+N)$ is a preview of the external power on a discrete time horizon $t(k+1),\ldots,t(k+N)$, $i_B$

is a balancing current, k is a point in time, N is a number of future values, and $i_B^{SP}$ is a target on a mean balancing current.

15. The energy storage device of any of examples 9-13 wherein the varying energy demand is based on a preview of battery external power $P_E$ based on a probability density function of the battery external power $p(P_E)$, wherein controlling transfer of current between the energy cells uses a balancing current map $i_B (x, P_E)$ that maps external battery power $P_E$ and a balancing action x to the balancing current $i_B$, and wherein the balancing current map $i_B (x, P_E)$ is pre-computed by solving

$$\min_{i_B(P_E)} \int_{P_E^{\min}}^{P_E^{\max}} p(P_E) P_B \left( i_B \left( P_E \right), P_E \right) dP_E \quad \text{s.t.} \quad \frac{1}{i_B^{\max}} \int_{P_E^{\min}}^{P_E^{\max}} p(P_E) i_B \left( P_E \right) dP_E = x,$$

for a grid of x values.

16. A non-transitory computer readable storage device has instructions which when executed by circuitry cause the circuitry to perform operations comprising:

    determining battery external power demand on a multiple cell battery;
    transferring current between cells utilizing an energy accumulation device;
    and
    controlling transfer of current between the cells based on balancing current and battery external power demand while minimizing power loss.

17. The method of example 16 wherein determining battery external power demand comprises obtaining a preview of battery external power $P_E$ on a discrete time horizon.

18. The method of example 17 wherein 1 controlling transfer of current between the cells uses a model predictive control, minimizing balancing power loss on a future time horizon while keeping a given target on a mean balancing current.

19. The method of example 18 wherein an optimal future current transfer trajectory $i_B(k+1),...,i_B(k+N)$ is calculated in accordance with:

$$\min_{i_B(k+1),...,i_B(k+N)} \sum_{m=k+1}^{k+N} P_B \left( i_B(m), P_E(m) \right) \quad s.t. \quad \frac{1}{N} \sum_{m=k+1}^{k+N} i_B(m) = i_B^{SP},$$

where $P_E (k + 1), ..., P_E (k + N)$ is a preview of the external power on a discrete time horizon $t(k+1),..., t(k + N)$, $i_B$ is a balancing current, k is a point in time, N is a number of future values, and $i_B^{SP}$ is a target on a mean balancing current.

20. The method of example 19 wherein the first summation comprises a penalty function that is minimized by finding N values of the future balancing current trajectory that will minimize a sum of the balancing power losses in the N future values.

21. The method of example 16 wherein determining battery external power demand is based on a probability density function of the battery external power $p(P_E)$.

22. The method of example 21 wherein 1 controlling transfer of current between the cells uses a balancing current map that maps external battery power $P_E$ and a balancing action x to the balancing current $i_B$.

23. The method of example 22 wherein the balancing current map $i_B (x, P_E)$ is pre-computed by solving

$$\min_{i_B(P_E)} \int_{P_E^{\min}}^{P_E^{\max}} p(P_E) P_B \left( i_B \left( P_E \right), P_E \right) dP_E \quad \text{s.t.} \quad \frac{1}{i_B^{\max}} \int_{P_E^{\min}}^{P_E^{\max}} p(P_E) i_B \left( P_E \right) dP_E = x,$$

for a grid of *x* values.

Although a few embodiments have been described in detail above, other modifications are possible. For example, the logic flows depicted in the figures do not require the particular order shown, or sequential order, to achieve desirable results. Other steps may be provided, or steps may be eliminated, from the described flows, and other components may be added to, or removed from, the described systems. Other embodiments may be within the scope of the following claims.

**Claims**

1. A method comprising:

   determining battery external power demand on a multiple cell battery;
   transferring current between cells utilizing an energy accumulation device;
   and
   controlling transfer of current between the cells based on balancing current and battery external power demand while minimizing power loss.

2. The method of claim 1 wherein determining battery external power demand comprises obtaining a preview of battery external power $P_E$ on a discrete time horizon.

3. The method of claim 2 wherein controlling transfer of current between the cells uses a model predictive control, minimizing balancing power loss on a future time horizon while keeping a given target on a mean balancing current.

4. The method of claim 3 wherein an optimal future current transfer trajectory $i_B(k+1),...,i_B(k+N)$ is calculated in accordance with:

$$\min_{i_B(k+1),...,i_B(k+N)} \sum_{m=k+1}^{k+N} P_B\left(i_B(m), P_E(m)\right) \quad s.t. \quad \frac{1}{N} \sum_{m=k+1}^{k+N} i_B(m) = i_B^{SP},$$

where $P_E(k+1),...,P_E(k+N)$ is a preview of the external power on a discrete time horizon $t(k + 1), ..., t(k + N)$, $i_B$ is a balancing current, k is a point in time, N is a number of future values, and $i_B^{SP}$ is a target on a mean balancing current.

5. The method of claim 4 wherein the first summation comprises a penalty function that is minimized by finding N values of the future balancing current trajectory that will minimize a sum of the balancing power losses in the N future values.

6. The method of claim 1 wherein determining battery external power demand is based on a probability density function of the battery external power $p(P_E)$.

7. The method of claim 6 wherein controlling transfer of current between the cells uses a balancing current map that maps external battery power $P_E$ and a balancing action x to the balancing current $i_B$.

8. The method of claim 7 wherein the balancing current map $i_B(x, P_E)$ is pre-computed by solving

$$\min_{i_B(P_E)} \int_{P_E^{\min}}^{P_E^{\max}} p(P_E) P_B\left(i_B(P_E), P_E\right) dP_E \quad s.t. \quad \frac{1}{i_B^{\max}} \int_{P_E^{\min}}^{P_E^{\max}} p(P_E) i_B\left(P_E\right) dP_E = x,$$

for a grid of x values.

9. An energy storage system comprising:

   multiple energy cells coupled to provide a current to a load having a varying energy demand;
   an energy accumulation device coupled to two or more of the energy cells;
   and
   a balancing controller coupled to the energy accumulation device to control transfer of energy between the two or more energy cells and the energy accumulation device based on balancing transfer of energy and varying energy demand while minimizing power loss.

10. The energy storage system of claim 9 and further comprising a plurality of switches, each switch coupled to the energy accumulation device and across a corresponding energy cell, wherein the switch is turned on and off by the balancing controller to control current provided to and from each cell via the energy accumulation device.

11. The energy storage device of any one of claims 9-10 wherein the energy accumulation device comprises an inductor coupled to a positive terminal of one of the two energy cells and coupled to a negative terminal of the other of the two energy cells.

12. The energy storage device of claim 11 and further comprising multiple diodes, each diode coupled to control a direction current flow between the cells.

13. The energy storage device of claim 12 wherein each diode is coupled in parallel with one of the plurality of switches across the inductor and a respective energy cell.

14. The energy storage device of any one of claims 9-13 wherein the varying energy demand is based on a preview of battery external power $P_E$ on a discrete time horizon, and wherein balancing transfer of energy and varying energy demand while minimizing power loss includes controlling transfer of current between the cells using a model predictive control, minimizing balancing power loss on a future time horizon while keeping a given target on a mean balancing current, and wherein an optimal future current transfer trajectory $i_B(k+1),...,i_B(k+N)$ is calculated in accordance with:

$$\min_{i_B(k+1),...,i_B(k+N)} \sum_{m=k+1}^{k+N} P_B\left(i_B(m), P_E(m)\right) \quad s.t. \quad \frac{1}{N}\sum_{m=k+1}^{k+N} i_B(m) = i_B^{SP},$$

where $P_E(k+1), ..., P_E(k+N)$ is a preview of the external power on a discrete time horizon $t(k+1), ..., t(k+N)$, $i_B$ is a balancing current, k is a point in time, N is a number of future values, and $i_B^{SP}$ is a target on a mean balancing current.

15. The energy storage device of any one of claims 9-13 wherein the varying energy demand is based on a preview of battery external power $P_E$ based on a probability density function of the battery external power $p(P_E)$, wherein controlling transfer of current between the energy cells uses a balancing current map $i_B(x, P_E)$ that maps external battery power $P_E$ and a balancing action x to the balancing current $i_B$, and wherein the balancing current map $i_B(x, P_E)$ is pre-computed by solving

$$\min_{i_B(P_E)} \int_{P_E^{\min}}^{P_E^{\max}} p(P_E)P_B\left(i_B\left(P_E\right), P_E\right)dP_E \quad s.t. \quad \frac{1}{i_B^{\max}}\int_{P_E^{\min}}^{P_E^{\max}} p(P_E)i_B\left(P_E\right)dP_E = x,$$

for a grid of x values.

FIG. 1

FIG. 2

FIG. 3A

FIG. 3B

FIG. 3C

FIG. 3D

BATTERY EXTERNAL POWER [W]

FIG. 4

BATTERY EXTERNAL POWER [W]

FIG. 5

$$\underset{\substack{i_B(k+1),\ldots,i_B(k+N)}}{\min} \sum_{m=k+1}^{k+N} P_B\left(i_B(m), P_E(m)\right) \quad s.t. \quad \frac{1}{N}\sum_{m=k+1}^{k+N} i_B(m) = i_B^{SP},$$

FIG. 6

FIG. 7A

FIG. 7B

EP 3 285 352 A1

FIG. 8

FIG. 9

EP 3 285 352 A1

$$\underset{i_B(P_E)}{\min} \int_{P_E^{\min}}^{P_E^{\max}} p(P_E) P_B\big(i_B(P_E), P_E\big) dP_E \quad \text{s.t.} \quad \frac{1}{i_B^{\max}} \int_{P_E^{\min}}^{P_E^{\max}} p(P_E) i_B(P_E) dP_E = x,$$

*1000*   *1010*   *1020*   *1030*   *1040*

FIG. 10

FIG. 11

Europäisches Patentamt

European Patent Office

Office européen des brevets

## EUROPEAN SEARCH REPORT

Application Number

EP 16 18 4824

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/266390 A1 (SHIN KANG G [US] ET AL) 24 September 2015 (2015-09-24) | 1,2,9 | INV. H02J7/00 B60L11/18 |
| Y | * paragraph [0004] - paragraph [0090] * | 3,4,6, 10-14 | |
| X | EP 1 256 476 A2 (FORD GLOBAL TECH INC [US]) 13 November 2002 (2002-11-13) | 1,9 | |
| Y | * paragraph [0008] - paragraph [0106] * | 2-4,6, 10-14 | |
| Y | US 2015/222137 A1 (WANG CHUAN SHENG [TW] ET AL) 6 August 2015 (2015-08-06) * figure 2 * | 10-13 | |
| Y | SACHS JULIA ET AL: "Combined probabilistic and set-based uncertainties for a stochastic model predictive control of island energy systems", 2016 AMERICAN CONTROL CONFERENCE (ACC), AMERICAN AUTOMATIC CONTROL COUNCIL (AACC), 6 July 2016 (2016-07-06), pages 6767-6772, XP032933753, DOI: 10.1109/ACC.2016.7526737 [retrieved on 2016-07-29] | 2-4,6,14 | |
| A | * page 6767 - page 6771 * | 5,7,8,15 | |

TECHNICAL FIELDS SEARCHED (IPC)

H02J
B60L
H01M

The present search report has been drawn up for all claims

| Place of search | Date of completion of the search | Examiner |
|---|---|---|
| Munich | 21 December 2016 | Jonda, Sven |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 16 18 4824

This annex lists the patent family members relating to the patent documents cited in the above-mentioned European search report.
The members are as contained in the European Patent Office EDP file on
The European Patent Office is in no way liable for these particulars which are merely given for the purpose of information.

21-12-2016

| Patent document cited in search report | | Publication date | Patent family member(s) | | Publication date |
|---|---|---|---|---|---|
| US 2015266390 | A1 | 24-09-2015 | US | 2015266390 A1 | 24-09-2015 |
| | | | WO | 2015148451 A1 | 01-10-2015 |
| EP 1256476 | A2 | 13-11-2002 | CA | 2385952 A1 | 09-11-2002 |
| | | | EP | 1256476 A2 | 13-11-2002 |
| | | | JP | 4637443 B2 | 23-02-2011 |
| | | | JP | 2003047110 A | 14-02-2003 |
| | | | US | 2002188387 A1 | 12-12-2002 |
| US 2015222137 | A1 | 06-08-2015 | US | 2015222137 A1 | 06-08-2015 |
| | | | US | 2016164314 A1 | 09-06-2016 |

EPO FORM P0459

For more details about this annex : see Official Journal of the European Patent Office, No. 12/82